# EUROPEAN PATENT APPLICATION

(11) **EP 4 332 619 A1**
(43) Date of publication of application: **06.03.2024**
(21) Application number: 21939066.3
(22) Date of filing: 15.12.2021
(51) Int. Cl.: G01S 7/484, G01S 17/48

(54) **CONTROL METHOD FOR LASER RADAR, AND LASER RADAR**

(30) Priority: 27.04.2021 CN 202110461447
(71) Applicant: Hesai Technology Co., Ltd., Shanghai 201821 (CN)
(72) Inventor: LIU, Kui, Shanghai 201821 (CN); XIANG, Shaoqing, Shanghai 201821 (CN)
(74) Representative: Appelt, Christian W.
(86) International application number: PCT/CN2021/138321
(87) International publication number: WO 2022/227607

(57) **Abstract**

A control method (10) for a LiDAR (100). The method comprises: transmitting a multi-pulse sequence with a time interval encoding (S101); receiving LiDAR echoes to determine whether the LiDAR echoes include a valid echo pulse sequence corresponding to the multi-pulse sequence (S102); when the LiDAR echoes includes the valid echo pulse sequence corresponding to the multi-pulse sequence, determining whether the valid echo pulse sequence is interfered with according to a pulse characteristic of the valid echo pulse sequence (S103); and when the valid echo pulse sequence is interfered with, adjusting the time interval encoding at a next transmission according to a distribution of an interference signal in the LiDAR echoes. (S104). According to the consistency of the pulse characteristic of the valid echo pulse sequence (or the degree to which the expectation is met), whether the valid echo pulse sequence is interfered with is determined and the setting of time interval encoding is adjusted at the next transmission according to the distribution of the interference signal in the LiDAR echoes.

## Description

### TECHNICAL FIELD

The present disclosure relates to the field of laser detection technologies, and in particular to a control method for a LiDAR and a LiDAR.

### BACKGROUND

A LiDAR actively transmits a signal pulse and then the signal pulse is reflected by an object. The LiDAR receives the reflected signal pulse to determine the orientation of the object and the distance between the LiDAR and the object based on factors such as a time and a signal phase difference. After the point frequency of LiDAR, which can be collectively determined by the number of channels, ranging distance, resolution, and refresh rate, reaches a certain level, it may become impossible to allocate time for each channel to work sequentially within a detection cycle. For example, the LiDAR has 64 channels (lines), a required ranging distance of 200m, a refresh rate (rotating speed) of 10Hz, and a horizontal angular resolution of 0.2°. Then, according to the time-of-flight method of d=c*t/2 (d is the ranging distance, c is the speed of light, and t is the time of flight), the round-trip time of flight of 200m ranging distance is 1.34us, it takes 55.6 us to turn through the horizontal angular resolution of 0.2°, and it is calculated as: 55.6/1.34=41.5, which means that light beam can only be emitted up to 41 times in one detection cycle. Therefore, in the case of 64 lines, multiple channels need to to work at the same time. If the number of channels of LiDAR is higher, the ranging distance is farther, the resolution is higher, and the refresh rate is higher, there can be more channels working at the same time. Multiple channels are required to work at the same time, which leads to the problem of mutual interference between the LiDAR's own channels.

As the application of LiDAR becomes more and more ubiquitous, the probability that LiDARs encounter has also been greatly increased. There can be mutual interference between different LiDARs working in the same space at the same time.

In addition, some other laser products that use wavelengths similar to the LiDAR may also produce signals that interfere with the LiDAR.

The contents of the background section are only technologies known to the discloser and do not necessarily represent the existing technology in the field.

### SUMMARY

In view of at least one disadvantage in the existing technology, the present disclosure provides a control method for a LiDAR, including:
S101: transmitting a multi-pulse sequence with a time interval encoding;
S102: receiving LiDAR echoes to determine whether the LiDAR echoes include a valid echo pulse sequence corresponding to the multi-pulse sequence;
S103: when the LiDAR echoes includes the valid echo pulse sequence corresponding to the multi-pulse sequence, determining whether the valid echo pulse sequence is interfered with according to a pulse characteristic of the valid echo pulse sequence; and
S104: when the valid echo pulse sequence is interfered with, adjusting the time interval encoding at a next transmission according to a distribution of an interference signal in the LiDAR echoes.

According to an aspect of the present disclosure, step S102 further includes:
extracting a plurality of echo pulse signals with peak intensities greater than an intensity threshold in the LiDAR echoes; and
when a time interval of the plurality of echo pulse signals matches a time interval of the multi-pulse sequence, taking the plurality of echo pulse signals as the valid echo pulse sequence corresponding to the multi-pulse sequence; and
the interference signal in the LiDAR echoes includes: an echo pulse signal of the plurality of echo pulse signals with the peak intensities greater than the intensity threshold in the LiDAR echoes excluding the valid echo pulse sequence, and an interfered pulse of the valid echo pulse sequence.

According to an aspect of the present disclosure, the step S 102 further includes:
calculating a difference between the time interval of the plurality of echo pulse signals and the time interval of the multi-pulse sequence, and when the difference is less than a first tolerance threshold, taking the plurality of echo pulse signals as the valid echo pulse sequence corresponding to the multi-pulse sequence.

According to an aspect of the present disclosure, the control method further includes:
when the LiDAR echoes include an echo pulse signal with a peak intensity greater than the intensity threshold and do not include the valid echo pulse sequence corresponding to the multi-pulse sequence, adjusting the time interval encoding at the next transmission.

According to an aspect of the present disclosure, step S 103 further includes:
determining whether the valid echo pulse sequence is interfered with according to a similarity between pulse width characteristic of a plurality of pulses in the valid echo pulse sequence and pulse width characteristic of a plurality of pulses in the multi-pulse sequence; and/or
determining whether the valid echo pulse sequence is interfered with according to a similarity between peak intensity characteristic of the plurality of pulses in the valid echo pulse sequence and peak intensity characteristic of the plurality of pulses in the multi-pulse sequence.

According to an aspect of the present disclosure, the step S 103 further includes:
determining that the valid echo pulse sequence is interfered with when relative differences between pulse widths of the plurality of pulses in the valid echo pulse sequence and pulse widths of the plurality of pulses in the multi-pulse sequence are greater than a second tolerance threshold, and determining at least one interfered pulse according to the relative differences in pulse widths.

According to an aspect of the present disclosure, the step S 103 further includes:
calculating a sum of absolute differences between any two of the pulse widths of the plurality of pulses in the valid echo pulse sequence; and
when the sum of the absolute differences is greater than a second tolerance threshold, determining that the valid echo pulse sequence is interfered with, and determining at least one interfered pulse according to the absolute differences.

According to an aspect of the present disclosure, the step S 103 further includes:
determining that the valid echo pulse sequence is interfered with when relative differences between peak intensities of the plurality of pulses in the valid echo pulse sequence and peak intensities of the plurality of pulses in the multi-pulse sequence are greater than a third tolerance threshold, and determining at least one interfered pulse according to the relative differences in peak intensities.

According to an aspect of the present disclosure, the step S 103 further includes:
calculating a sum of absolute differences between any two of the peak intensities of the plurality of pulses in the valid echo pulse sequence; and
when the sum of the absolute differences is greater than a third tolerance threshold, determining that the valid echo pulse sequence is interfered with, and determining at least one interfered pulse according to the absolute differences.

According to an aspect of the present disclosure, step S 104 further includes:
adjusting the time interval encoding at the next transmission according to the distribution of the interference signal in the LiDAR echoes, such that the valid echo pulse sequence generated by the reflection of the multi-pulse sequence at the next transmission is located outside a time period of the interference signal.

According to an aspect of the present disclosure, the step S 104 further includes:
transmitting the multi-pulse sequence with a preset time delay at the next transmission according to the distribution of the interference signal in the LiDAR echoes.

The present disclosure also provides a LiDAR, including:
a transmitting unit configured to transmit a multi-pulse sequence with a time interval encoding;
a receiving unit configured to receive LiDAR echoes;
a signal processing unit coupled to the transmitting unit and the receiving unit respectively and configured to:
determine whether the LiDAR echoes include a valid echo pulse sequence corresponding to the multi-pulse sequence;
when the LiDAR echoes include the valid echo pulse sequence corresponding to the multi-pulse sequence, determine whether the valid echo pulse sequence is interfered with according to a pulse characteristic of the valid echo pulse sequence; and
when the valid echo pulse sequence is interfered with, adjust the time interval encoding at a next transmission according to a distribution of an interference signal in the LiDAR echoes.

According to an aspect of the present disclosure, the LiDAR further includes:
an analog-to-digital conversion unit configured to sample and perform analog-to-digital conversion on the LiDAR echoes;
wherein the signal processing unit is further configured to:
   extract a plurality of echo pulse signals with peak intensities greater than an intensity threshold in the LiDAR echoes after the analog-to-digital conversion; and
   when a time interval of the plurality of echo pulse signals matches a time interval of the multi-pulse sequence, take the plurality of echo pulse signals as the valid echo pulse sequence corresponding to the multi-pulse sequence; and
   the interference signal in the LiDAR echoes includes: an echo pulse signal of the plurality of echo pulse signals with the peak intensities greater than the intensity threshold in the LiDAR echoes excluding the valid echo pulse sequence removed, and an interfered pulse of the valid echo pulse sequence.

According to an aspect of the present disclosure, the signal processing unit is further configured to:
calculate a difference between the time interval of the plurality of echo pulse signals and the time interval of the multi-pulse sequence, and when the difference is less than a first tolerance threshold, taking the plurality of echo pulse signals as the valid echo pulse sequence corresponding to the multi-pulse sequence.

According to an aspect of the present disclosure, the signal processing unit is further configured to:
when the LiDAR echoes include an echo pulse signal with a peak intensity greater than the intensity threshold and do not include the valid echo pulse sequence corresponding to the multi-pulse sequence, adjust the time interval encoding at the next transmission.

According to an aspect of the present disclosure, the signal processing unit is further configured to:
determine whether the valid echo pulse sequence is interfered with according to a similarity between pulse width characteristic of a plurality of pulses in the valid echo pulse sequence and pulse width characteristic of a plurality of pulses in the multi-pulse sequence; and/or
determine whether the valid echo pulse sequence is interfered with according to a similarity between peak intensity characteristic of the plurality of pulses in the valid echo pulse sequence and peak intensity characteristic of the plurality of pulses in the multi-pulse sequence.

According to an aspect of the present disclosure, the signal processing unit is further configured to:
determine that the valid echo pulse sequence is interfered with when relative differences between pulse widths of the plurality of pulses in the valid echo pulse sequence and pulse widths of the plurality of pulses in the multi-pulse sequence are greater than a second tolerance threshold, and determine at least one interfered pulse according to the relative differences in pulse widths; and/or
determine that the valid echo pulse sequence is interfered with when relative differences between peak intensities of the plurality of pulses in the valid echo pulse sequence and peak intensities of the plurality of pulses in the multi-pulse sequence are greater than a third tolerance threshold, and determine at least one interfered pulse according to the relative differences in peak intensities.

According to an aspect of the present disclosure, the signal processing unit is further configured to:
calculate a sum of absolute differences between any two of the pulse widths of the plurality of pulses in the valid echo pulse sequence;
when the sum of the absolute differences is greater than a second tolerance threshold, determine that the valid echo pulse sequence is interfered with, and determine at least one interfered pulse according to the absolute differences; and/or
calculate a sum of absolute differences between any two of the peak intensities of the plurality of pulses in the valid echo pulse sequence; and
when the sum of the absolute differences is greater than a third tolerance threshold, determine that the valid echo pulse sequence is interfered with, and determine at least one interfered pulse according to the absolute differences.

According to an aspect of the present disclosure, the signal processing unit is further configured to:
adjust the time interval encoding at the next transmission according to the distribution of the interference signal in the LiDAR echoes, such that the valid echo pulse sequence generated by the reflection of the multi-pulse sequence at the next transmission is located outside a time period of the interference signal.

According to an aspect of the present disclosure, the signal processing unit is further configured to:
transmit the multi-pulse sequence with a preset time delay at the next transmission according to the distribution of the interference signal in the LiDAR echoes.

The preferred embodiments of the present disclosure provide a control method for a LiDAR. According to the consistency of the pulse characteristic of the valid echo pulse sequence (or the degree to which the expectation is met), whether the valid echo pulse sequence is interfered with is determined and the setting of time interval encoding is adjusted at the next transmission according to the distribution of the interference signal in the LiDAR echoes. After determining that the valid echo pulse sequence has been interfered with, an uninterfered time segment for the LiDAR echoes is used for the re-encoding. In the next detection cycle, relatively regular and fixed signal interference can be effectively avoided, thereby improving detection performance of the LiDAR. In addition, since the encoding is set to be dynamic, it is possible to avoid the complete loss of the LiDAR echo signal caused by the effective signal being always under the influence of strong interference.

### BRIEF DESCRIPTION OF THE DRAWINGS

The drawings, which constitute a part of the specification, are employed to provide a further understanding of the present disclosure. They are used to explain the present disclosure together with the embodiments of the present disclosure and do not constitute a limitation of the present disclosure. In the drawings:
FIG. 1 schematically illustrates transmitted signals with time interval encoding and a distribution of interference signals in LiDAR echoes;
FIG. 2 illustrates a control method for a LiDAR according to a preferred embodiment of the present disclosure;
FIG. 3 schematically illustrates transmitted signals with time interval encoding and the identification of reflected echoes;
FIG. 4 schematically illustrates a multi-pulse sequence with time interval encoding and its pulse characteristic according to a preferred embodiment of the present disclosure;
FIG. 5 schematically illustrates the extraction of a valid echo pulse sequence from LiDAR echoes according to a preferred embodiment of the present disclosure;
FIG. 6 schematically illustrates pulse characteristic of a valid echo pulse sequence according to a preferred embodiment of the present disclosure;
FIG. 7 schematically illustrates preferred encoding time segments according to a preferred embodiment of the present disclosure;
FIG. 8 schematically illustrates preferred encoding time segments according to a preferred embodiment of the present disclosure;
FIG. 9 schematically illustrates re-encoding within preferred encoding time segments according to a preferred embodiment of the present disclosure; and
FIG. 10 schematically shows a LiDAR according to a preferred embodiment of the present disclosure.

### DETAILED DESCRIPTION

In the following, only some exemplary embodiments are briefly described. As those skilled in the art will recognize, the described embodiments may be modified in various different ways without departing from the spirit or scope of the present disclosure. Accordingly, the drawings and descriptions are to be regarded as illustrative and not restrictive in nature.

In the description of the present disclosure, it needs to be understood that the orientation or position relations denoted by such terms as "central" "longitudinal" "latitudinal" "length" "width" "thickness" "above" "below" "front" "rear" "left" "right" "vertical" "horizontal" "top" "bottom" "inside" "outside" "clockwise" "counterclockwise" and the like are based on the orientation or position relations as shown in the accompanying drawings, and are used only for the purpose of facilitating description of the present disclosure and simplification of the description, instead of indicating or suggesting that the denoted devices or elements must be oriented specifically, or configured or operated in a specific orientation. Thus, such terms should not be construed to limit the present disclosure. In addition, such terms as "first" and "second" are only used for the purpose of description, rather than indicating or suggesting relative importance or implicitly indicating the number of the denoted technical features. Accordingly, features defined with "first" and "second" may, expressly or implicitly, include one or more of the features. In the description of the present disclosure, "plurality" means two or more, unless otherwise defined explicitly and specifically.

In the description of the present disclosure, it needs to be noted that, unless otherwise specified and defined explicitly, such terms as "installation" "coupling" and "connection" should be broadly understood as, for example, fixed connection, detachable connection, or integral connection; or mechanical connection, electrical connection or intercommunication; or direct connection, or indirect connection via an intermediary medium; or internal communication between two elements or interaction between two elements. For those skilled in the art, the specific meanings of such terms herein can be construed in light of the specific circumstances.

Herein, unless otherwise specified and defined explicitly, if a first feature is "on" or "beneath" a second feature, this may cover direct contact between the first and second features, or contact via another feature therebetween, other than the direct contact. Furthermore, if a first feature is "on", "above", or "over" a second feature, this may cover the case that the first feature is right above or obliquely above the second feature, or just indicate that the level of the first feature is higher than that of the second feature. If a first feature is "beneath", "below", or "under" a second feature, this may cover the case that the first feature is right below or obliquely below the second feature, or just indicate that the level of the first feature is lower than that of the second feature.

The disclosure below provides many different embodiments or examples so as to realize different structures described herein. In order to simplify the disclosure herein, the following will give the description of the parts and arrangements embodied in specific examples. Of course, they are only for the exemplary purpose, not intended to limit the present disclosure. Besides, the present disclosure may repeat a reference number and/or reference letter in different examples, and such repeat is for the purpose of simplification and clarity, which does not represent any relation among various embodiments and/or arrangements as discussed. In addition, the present disclosure provides examples of various specific processes and materials, but those skilled in the art can also be aware of application of other processes and/or use of other materials.

The embodiments of the present disclosure will be described below in conjunction with the accompanying drawings. It should be understood that the embodiments described herein are only used to illustrate and explain the present disclosure, and are not intended to limit the present disclosure.

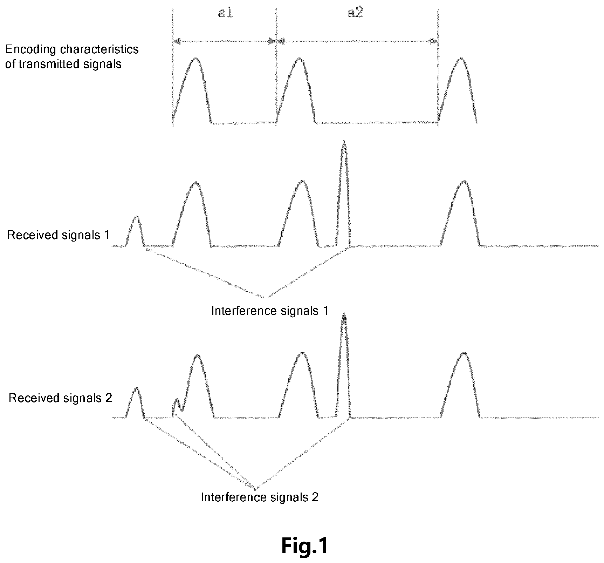

In order to suppress interference to the LiDAR, a common method is to use signal encoding. That is, multiple light pulses are used as a set of signals with a specific time interval between the light pulses as encoding, and encoding features are used to identify channels, thereby identifying a signal belonging to its own channel. This method can solve the interference problem to a certain extent, but it is not flexible and effective enough. When the LiDAR is subject to strong interference, for example, when the pulse of the interference signal is superimposed with the pulse of the normal signal, the situations where the accuracy, reflectivity, noise suppression and other performance are reduced or even the detection is completely lost still exist, as shown in FIG. 1. FIG. 1 illustrates an example in which a channel A (usually including a corresponding laser and a detector) of the LiDAR transmits signals by using three-pulse encoding, where the time intervals between the three pulses are (a1, a2). When the received signals (i.e., the LiDAR echoes received by the detector of the channel A excluding a pulse with a peak intensity lower than the intensity threshold) are "received signals 1", there is no overlap between the pulses of the interference signals 1 and the pulses, reflected by an external obstacle, of the transmitted signals of this channel. According to the encoding feature matching, the valid echo pulse sequence (a group of pulses with the same encoding features) can be identified and the distance can be accurately known. When the received signals are "received signals 2", the pulses of the interference signals 2 are superimposed with the pulses, reflected by an external obstacle, of the transmitted signals of this channel (strong interference). The second pulse in the LiDAR echoes is formed by a superposition of an echo, reflected by an external obstacle, of a transmitted signal of this channel and an interference signal, and is still regarded as one pulse after the superposition. According to the encoding feature matching (encoding feature matching usually has a certain tolerance), the LiDAR echoes can also be identified as a valid echo pulse sequence. However, because the pulse width (or pulse front) of the first echo pulse in the valid echo pulse sequence changes, inaccurate ranging, abnormal reflectivity and the like are caused. The above-mentioned interference pulses may come from another channel of the LiDAR, or from another LiDAR, or from another laser product using a similar wavelength to the LiDAR.

The preferred embodiment of the present disclosure provides a control method for a LiDAR, which analyzes whether the valid echo pulse sequence in the LiDAR echoes is interfered with according to the consistency characteristic of multi-pulse signals, and after determining that it is interfered with, controls the LiDAR to actively take measures to solve the problem of LiDAR signal interference by avoiding an interference source.

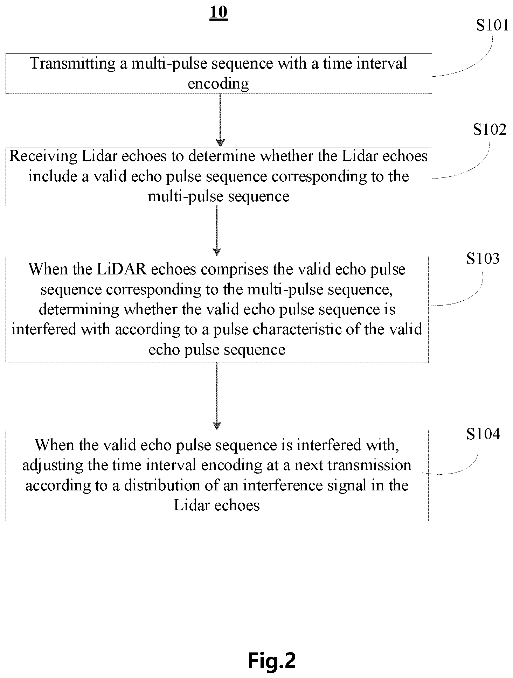

According to a preferred embodiment of the present disclosure, as shown in FIG. 2, the present disclosure provides a control method 10 for a LiDAR, which includes steps S101 to S104.

In step S101, a multi-pulse sequence with a time interval encoding is transmitted. The laser of the channel A of the LiDAR emits a multi-pulse sequence with time interval encoding. The multi-pulse sequence can include the 1st laser pulse, the 2nd laser pulse, ..., the Nth laser pulse, and there is a timing relationship among the multiple laser pulses. For example, there is a time interval a1 between the 2nd laser pulse and the 1st laser pulse, there is a time interval a2 between the 3rd laser pulse and the 2nd laser pulse, there is a time interval aN-1 between the Nth laser pulse and the N-1th laser pulse, and so on. The above time intervals represent the timing relationship of the transmitted pulse sequence.

In step S102, the LiDAR echoes are received, and it is determined whether the LiDAR echoes include a valid echo pulse sequence corresponding to the multi-pulse sequence.

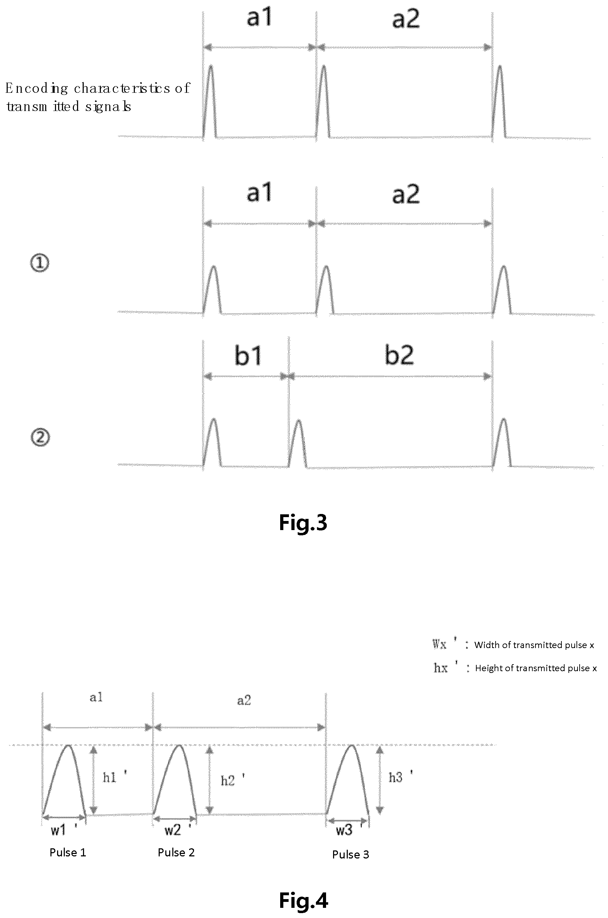

As shown in FIG. 3, the laser of the channel A of the LiDAR emits a multi-pulse sequence with time interval encoding. The multi-pulse sequence includes the 1st laser pulse, the 2nd laser pulse and the 3rd laser pulse, where there is a time interval a1 between the 2nd pulse and the 1st laser pulse, and there is a time interval a2 between the 3rd laser pulse and the 2nd laser pulse. In the detection area, the above-mentioned pulse signals will be reflected off an object and echo signals are generated. The pulse sequence intervals of the echo signals will be the same as the intervals of the transmit pulse sequence. That is to say, the echoes of the laser pulses have the same timing characteristic as the transmitted signals, and thereby the pulse sequences of the transmitted pulse and the received pulses can be compared to determine whether the LiDAR echoes include the reflected echoes of the transmitted pulses of the channel.

After removing a pulse with a peak intensity lower than the intensity threshold from the LiDAR echoes received by the detector of the channel A, starting from the first echo pulse, the received pulse sequence including the same number (e.g., 3 herein) of pulses as the transmitted multi-pulse sequence is extracted in sequence, where the LiDAR echoes received by the detector of the channel A refer to all signals received by the detector of the channel A within the reading time window. When the extracted received pulse sequence is the situation shown in ① in FIG. 3, the plurality of echo pulse signals in the received pulse sequence have time intervals (a1, a2). That is to say, the timing of the plurality of echo pulse signals is the same as that of the transmitted multi-pulse sequence, the plurality of echo pulse signals are determined as a valid echo pulse sequence corresponding to the transmitted multi-pulse sequence, and the information carried by the signals is extracted. When the extracted received pulse sequence is the situation shown in ② in FIG. 3, the plurality of echo pulse signals in the received pulse sequence have time intervals (b 1, b2). That is, the timing of the plurality of echo pulse signals is different from that of the transmitted multi-pulse sequence, and hence the plurality of echo pulse signals are not echoes of the transmitted multi-pulse sequence (a1, a2), then continuing to search from the 2nd echo pulse until the echoes of the transmitted multi-pulse sequence (a1, a2) are found, or the searching of all the echo pulses in the LiDAR echoes is completed without finding a valid echo pulse sequence.

In step S 103, when the LiDAR echoes include a valid echo pulse sequence corresponding to the multi-pulse sequence, it is determined whether the valid echo pulse sequence is interfered with according to the pulse characteristic of the valid echo pulse sequence.

According to a preferred embodiment of the present disclosure, as shown in FIG. 4, the laser of the channel A of the LiDAR emits three laser pulses with time interval encoding (a1, a2), and the pulse characteristic of the emitted pulse sequence include: the pulse widths of respective pulses are w1', w2' and w3' in sequence, and the peak intensities of respective pulse are h1', h2' and h3' in sequence.

The pulse characteristic of the valid echo pulse sequence received by the detector of the channel A includes the variation trend of the peak intensities and/or pulse widths of multiple pulses, and it can be determineded whether the valid echo pulse sequence is interfered with by analyzing the consistency of the pulse characteristic in the valid echo pulse sequence. Theoretically, the valid echo pulse sequence screened out by this channel should be caused by the active light emission of this channel. Then, the pulse characteristic (including but not limited to peak intensities and pulse widths) of multiple pulses in the valid echo pulse sequence should be expectable. Since the probability that multiple pulses in the valid echo pulse sequence are subject to the same interference is very low and basically negligible, by analyzing whether the pulse characteristic of multiple pulses in the valid echo pulse sequence is consistent with expectation, whether the valid echo pulse sequence is interfered with can be determined. For example, if the peak intensities of multi-pulse sequence transmitted by this channel are the same, then the peak intensities of multiple pulses in the valid echo pulse sequence should also be consistent. If the peak intensities of the multi-pulse sequence transmitted by this channel are different, such as a combination of strong, weak, and strong, then the peak intensities of the valid echo pulse sequences should also show a variation trend of strong, weak, and strong. For another example, if the pulse widths of the multi-pulse sequence transmitted by the channel are the same, the pulse widths of the multiple pulses in the valid echo pulse sequence should also be consistent. If the pulse widths of the multi-pulse sequence transmitted by this channel are different, such as a combination of wide, narrow, and wide, the pulse widths of the valid echo pulse sequence should also show a variation trend of wide, narrow, and wide.

In step S 104, when the valid echo pulse sequence is interfered with, the time interval encoding is adjusted at the next transmission according to the distribution of the interference signal in the LiDAR echoes.

The interference to the LiDAR comes from two aspects. On the one hand, it is the mutual interference between the channels of the LiDAR itself that emit light at the same time. For example, when multiple channels working at the same time encounter a nearby highly reflective plate, the signal transmitted by the channel A is reflected by the highly reflective plate to possibly illuminate another channel working at the same time (that is, optical crosstalk occurs). Taking a channel B working at the same time as an example, the channel B not only receives an echo pulse of its own channel, but also receives an echo pulse of the channel A. At this time, the pulses received by the channel B will overlap, resulting in inaccurate ranging and reflectivity, or even complete loss of detection. On the other hand, interference may come from the outside world, such as light emission of another LiDAR or light emission of another product using a similar wavelength to the LiDAR. This disclosure adjusts the time interval encoding at the next transmission according to the distribution of an interference signal in the LiDAR echoes, so that the valid echo pulse sequence is located outside a time period of the interference signal distribution, so as to avoid a relatively fixed and regular interference signal.

According to a preferred embodiment of the present disclosure, in the control method 10 for the LiDAR, step S102 further includes: extracting a plurality of echo pulse signals with peak intensities greater than an intensity threshold in the LiDAR echoes; and when a time interval of the plurality of echo pulse signals matches a time interval of the transmitted pulse sequence, taking the plurality of echo pulse signals as the valid echo pulse sequence corresponding to the transmitted pulse sequence. The interference signal in the LiDAR echoes includes: an echo pulse signal of the plurality of echo pulse signals with the peak intensities greater than the intensity threshold in the LiDAR echoes excluding the valid echo pulse sequence, and an interfered pulse of the valid echo pulse sequence.

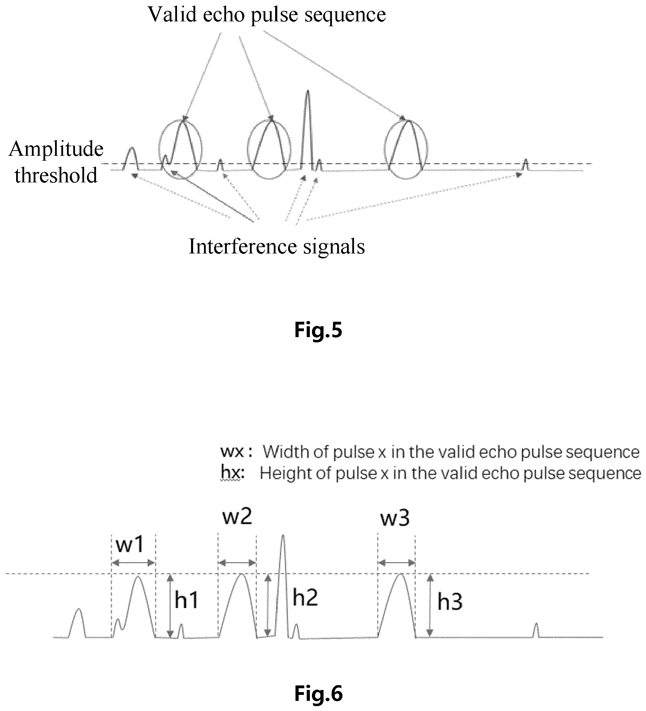

As shown in FIG. 5, according to a preferred embodiment of the present disclosure, the full-wave waveform of the LiDAR echoes is sampled through an analog-to-digital converter (ADC), and the intensity threshold is set to filter out multiple echo pulse signals with the peak intensities greater than the intensity threshold in the LiDAR echoes. Among them, the time intervals of the three echo pulse signals circled in the figure match the time intervals of the transmitted pulse sequence, and these three echo pulse signals are regarded as a valid echo pulse sequence corresponding to the transmitted pulse sequence. As shown in FIG. 5, the valid echo pulse sequence (i.e., the three echo pulse signals circled in the figure) is removed from the plurality of echo pulse signals filtered out by the intensity threshold, and the remaining echo pulse signals (i.e., the echo pulse signals pointed by the dotted arrow in the FIG. 5) are the interference signals in the LiDAR echoes. According to the judgment method of the present disclosure (which will be introduced in detail later), it can be determined whether the valid echo pulse sequence is interfered with, and it is determined that at least an interfered pulse. The interference signals in the LiDAR echoes also include: the interfered pulse in the valid echo pulse sequence (the echo pulse signal pointed by the solid arrow in FIG. 5).

According to a preferred embodiment of the present disclosure, in the control method 10 for the LiDAR, step S102 further includes: calculating a difference between the time interval of the plurality of echo pulse signals and the time interval of the transmitted pulse sequence, and when the difference is less than a first tolerance threshold, taking the plurality of echo pulse signals as the valid echo pulse sequence corresponding to the transmitted pulse sequence.

The matching of encoding features is usually set with a certain tolerance. The tolerance corresponds to the confidence level. The larger the tolerance, the lower the confidence level. To increase the confidence level, the tolerance needs to be reduced. Within the confidence interval, a tolerance threshold is set, and then a valid echo pulse sequence is screened out according to the tolerance threshold. According to a preferred embodiment of the present disclosure, the laser of the channel A of the LiDAR emits three laser pulses with time interval encoding, and the expression of the tolerance is: |ΔFront13-code13|+|ΔFront12-code12|, where ΔFront13 represents the difference between the pulse front moments of the first and third echo pulses among the three echo pulse signals with peak intensities greater than the intensity threshold in the selected LiDAR echoes, code13 represents the corresponding initial set value, namely, the difference between the pulse front moments of the first and third transmitted pulses in the transmitted pulse sequence, ΔFront12 represents the difference between the pulse front moments of the first and second echo pulses among the above three echo pulse signals, and code12 represents the corresponding initial set value, that is, the difference between the leading edge moments of the first and second transmitted pulses in the transmitted pulse sequence. When the calculated tolerance is less than the tolerance threshold, it is considered that the time intervals of the plurality of echo pulse signals are the same as the time intervals of the transmitted pulse sequence. That is, the calculation result is within the confidence interval. The plurality of echo pulse signals are extracted as a valid echo pulse sequence corresponding to the transmitted pulse sequence.

It is easy for those skilled in the art to understand that the tolerance calculation method is not unique. It can be calculated by comparing the pulse front moments of multiple echo pulses with the pulse front moments of the transmitted pulses as mentioned above, or by comparing the corrected moments, determined from the pulse front edges of multiple echo pulses in combination with the pulse widths, with the pulse front moments of the transmitted pulses, which are all within the protection scope of the present disclosure.

According to a preferred embodiment of the present disclosure, the control method 10 for the LiDAR further includes: when the LiDAR echoes include an echo pulse signal with a peak intensity greater than the intensity threshold and do not include the valid echo pulse sequence corresponding to the transmitted pulse sequence, adjusting the time interval encoding at the next transmission.

If there is an echo pulse signal whose peak intensity is greater than the intensity threshold, but no valid echo pulse sequence corresponding to the transmitted pulse sequence is screened out, it is likely that the channel is subject to strong interference. In the next detection cycle (such as when the LiDAR rotates to the next horizontal angle), the channel reconfigures the time interval encoding to try to avoid strong interference.

According to a preferred embodiment of the present disclosure, in the control method 10 for the LiDAR, step S 103 further includes: determining whether the valid echo pulse sequence is interfered with according to a similarity between pulse width characteristic of a plurality of pulses in the valid echo pulse sequence and pulse width characteristic of a plurality of pulses in the transmitted pulse sequence; and/or determining whether the valid echo pulse sequence is interfered with according to a similarity between peak intensity characteristic of a plurality of pulses in the valid echo pulse sequence and peak intensity characteristic of a plurality of pulses in the transmitted pulse sequence.

According to a preferred embodiment of the present disclosure, as shown in FIG. 4, the laser of the channel A of the LiDAR emits three laser pulses with time interval encoding, the pulse widths of the transmitted pulse sequence are w1', w2', w3' in sequence, and the peak intensities are h1', h2', h3' in sequence. As shown in FIG. 6, the detector in the channel A receives LiDAR echoes, and the valid echo pulse sequence is obtained through intensity threshold screening and time interval encoding matching. The pulse widths of the valid echo pulse sequence are w1, w2, w3 in sequence, and the peak intensities are h1, h2, h3 in sequence.

The pulse widths w1, w2, w3 as an overall feature are compared with w1', w2', w3' as an overall feature (trend) to determine whether the valid echo pulse sequence is interfered with according to the similarity of the overall feature (trend); and/or, the peak intensities h1, h2, h3 as an overall feature are compared with h1', h2', h3' as an overall feature (trend) to determine whether the valid echo pulse sequence is interfered with according to the similarity of the overall feature (trend).

Those skilled in the art can easily understand that it is possible to determine whether the valid echo pulse sequence is interfered with according to the similarity of a certain pulse feature, or to determine whether the valid echo pulse sequence is interfered with according to the similarity of multiple pulse features in conjunction with a comparison result.

According to a preferred embodiment of the present disclosure, in the control method 10 for the LiDAR, step S 103 further includes: determining that the valid echo pulse sequence is interfered with when relative differences between the pulse widths of the plurality of pulses in the valid echo pulse sequence and the pulse widths of the plurality of pulses in the transmitted pulse sequence are greater than a second tolerance threshold, and determining at least one interfered pulse according to the relative differences in pulse widths.

According to a preferred embodiment of the present disclosure, the laser of the channel A of the LiDAR emits three laser pulses with equal pulse widths, that is, the ratio of the pulse widths of the transmitted pulse sequence is 1:1:1. In theory, although the pulse width of the echo pulse will be wider than that of the transmitted pulse, the ratio of the pulse widths of the echo pulse sequence should be consistent with that of the transmitted pulse sequence, that is, it is still 1: 1: 1 (it is generally considered that 3 pulses, for example, in one transmission, are reflected from the same point). The ratio of pulse widths of the valid echo pulse sequence is calculated, and the difference in ratio of pulse widths is calculated. If the difference (tolerance) in ratio of pulse widths is greater than the second tolerance threshold, it is determined that the valid echo pulse sequence is interfered with. For example, if the ratio of the pulse widths of the valid echo pulse sequence received by the detector of the channel A is 1.2:1:1 (the difference in ratio of pulse widths is 0.2, and, for example, the second tolerance threshold is preset to 0.1), the valid echo pulse sequence is interfered with and the first echo pulse signal is the interfered pulse. In general case, the probability that the plurality of echo pulse signals are interfered with at the same time and the deviation values are consistent is low.

According to a preferred embodiment of the present disclosure, the interference of the echoes can also be determined by the absolute values of the differences in pulse widths. In the control method 10 of the LiDAR, step S103 further includes: calculating a sum of absolute differences between the pulse widths of the plurality of pulses in the valid echo pulse sequence; and when the sum of the absolute differences is greater than the second tolerance threshold, determining that the valid echo pulse sequence is interfered with, and determining at least one interfered pulse according to the absolute differences.

The laser of the channel A of the LiDAR emits three laser pulses with equal pulse width, that is, the ratio of the pulse widths of the transmitted pulse sequence is 1:1:1. The sum of the absolute values of the differences of every two pulse widths of the valid echo pulse sequence is calculated as: |Δwidth13|+|Δwidth12|, where Δwidth13 represents the difference between of the pulse widths of the first and third echo pulses, and Δwidth12 represents the difference between the pulse widths of the first and second echo pulses. The second tolerance threshold is set. If |Δwidth13|+|Δwidth12| is within the second tolerance threshold, the valid echo pulse sequence is not considered to be interfered with. If the second tolerance threshold is exceeded, the valid echo pulse sequence is considered to be interfered with, and the interfered pulse is determined according to the differences in pulse widths. Further correction for the tolerance can also be made by another pulse characteristic such as a peak intensity. For example, when the peak intensity is low, indicating farther distance measurement, the second tolerance threshold may be increased, and when the peak intensity is high, indicating closer distance measurement, the second tolerance threshold may be decreased.

According to a preferred embodiment of the present disclosure, in the control method 10 for the LiDAR, step S 103 further includes: determining that the valid echo pulse sequence is interfered with when relative differences between the peak intensities of the plurality of pulses in the valid echo pulse sequence and the peak intensities of the plurality of pulses in the transmitted pulse sequence are greater than a third tolerance threshold, and determining at least one interfered pulse according to the relative differences in peak intensities.

According to a preferred embodiment of the present disclosure, the laser of the channel A of the LiDAR emits three laser pulses with equal peak intensities, that is, the ratio of the peak intensities of the transmitted pulse sequence is 1:1:1. Theoretically, although the peak intensity of the echo pulse will be attenuated as compared to the peak intensity of the transmitted pulse, the ratio of the peak intensities of the echo pulse sequence should remain consistent with that of the transmitted pulse sequence, that is, it should still be 1:1:1. The ratio of the peak intensities of the valid echo pulse sequence is calculated, and the difference in ratio of peak intensities is calculated. If the difference (tolerance) in ratio of peak intensities is greater than the third tolerance threshold, it is determined that the valid echo pulse sequence has been interfered with. For example, if the ratio of the peak intensities of the valid echo pulse sequence received by the detector of the channel A is 1:1.2:1 (the difference in ratio of peak intensities is 0.2, and, for example, the third tolerance threshold is preset to 0.15), the valid echo pulse sequence is interfered with and the second echo pulse signal is the interfered pulse. In general case, the probability that the plurality of echo pulse signals are interfered with at the same time and the deviation values are consistent is low.

According to a preferred embodiment of the present disclosure, the interference of the echoes can also be determined by the absolute values of the differences between the peak intensities. In the control method 10 for the LiDAR, step S103 further includes: calculating a sum of absolute differences between the peak intensities of the plurality of pulses in the valid echo pulse sequence; and when the sum of the absolute differences is greater than the third tolerance threshold, determining that the valid echo pulse sequence is interfered with, and determining at least one interfered pulse according to the absolute differences.

The laser of the channel A of the LiDAR emits three laser pulses with equal peak intensities, that is, the ratio of the peak intensities of the transmitted pulse sequence is 1:1:1. The sum of the absolute values of the differences between every two peak intensities of the valid echo pulse sequence is calculated as: |Δheight13|+|Δheight12|, where Δheight13 represents the difference between the peak intensities of the first and third echo pulses, and Δheight12 represents the difference between the peak intensities of the first and second echo pulses. The third tolerance threshold is set. If |Δheight13|+|Δheight12| is within the third tolerance threshold, the valid echo pulse sequence is considered not to be interfered with. If the third tolerance threshold is exceeded, the valid echo pulse sequence is considered to be interfered with, and the interfered pulse is determined according to the peak intensity differences.

Those skilled in the art can understand that, in order to simplify the description, in the above embodiments, the laser of the channel A emits pulses with equal pulse widths and equal peak intensities. In practical applications, a multi-pulse sequence with a certain changing trend in pulse characteristic is emitted. It is also feasible to determine an interference signal in the LiDAR echoes according to the similarity of the changing trend, which all fall within the scope of the present disclosure.

According to a preferred embodiment of the present disclosure, in the control method 10 for the LiDAR, step S104 further includes: adjusting the time interval encoding at the next transmission according to the distribution of the interference signal in the LiDAR echoes such that the valid echo pulse sequence generated by the reflection of the multi-pulse sequence at the next transmission is located outside a time period of the interference signal.

According to a preferred embodiment of the present disclosure, the laser of the channel A of the LiDAR emits a multi-pulse sequence with time interval encoding. If a interference signal in the LiDAR echoes come from an echo, reflected by an object, of the transmitted pulse of another channel (for example, a channel B) of the LiDAR, since the distance from the object usually does not change much in the next detection cycle (for example, when the LiDAR rotates to the next horizontal angle), the time period within which the interference signal generated by the light emission of the channel B is distributed in the LiDAR echoes is relatively fixed. By adjusting the time interval encoding of the transmitted pulse sequence of the channel A at the next transmission, the valid echo pulse sequence can be distributed outside a time period of the interference signal, that is, the interference caused by the light emission of another channel (such as the channel B) can be effectively avoided.

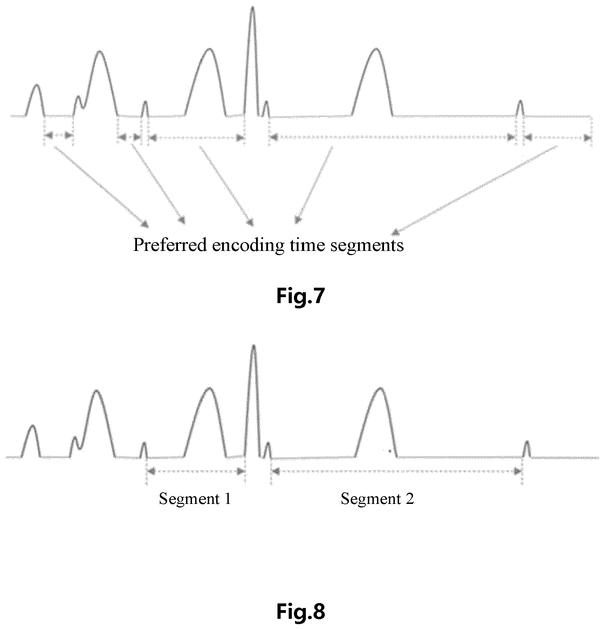

According to a preferred embodiment of the present disclosure, as shown in FIG. 7, when the valid echo pulse sequence is interfered with, a time segment excluding an interference moment in the LiDAR echoes is taken as the "preferred encoding time segment". By "preferred", it means that when the valid echo pulse sequence falls in this time segment in the next detection cycle (for example, the LiDAR turns to the next horizontal angle), the probability of being interfered with will be greatly reduced. The time segments of the interference moments cover both a weak interference signal, which can be detected only by encoding matching, and an interfered pulse in the vaid echo pulses, which contains a strong interference signal superimposed onto the echo pulses.

According to a preferred embodiment of the present disclosure, in the control method 10 for the LiDAR, step S104 further includes: transmitting the multi-pulse sequence with a preset time delay at the next transmission according to the distribution of the interference signal in the LiDAR echoes.

According to a preferred embodiment of the present disclosure, when the valid echo pulse sequence is interfered with, time interval encoding is re-performed within the "preferred encoding time segment" in the next detection cycle. As shown in FIG. 8, the specific operation method is as follows: first selecting a time segment with a large time interval (capable of accommodating the width of the echo pulse of the transmitted first laser pulse signal, the segment 1 in the preferred encoding time segments as shown in FIG. 8), setting a time delay ΔT when transmitting a signal, so that the echo pulse of the first laser pulse signal falls within the segment 1, and the echo pulses of the second laser pulse signal and the third laser pulse signal fall within the segment 2.

Those skilled in the art can understand that transmitting a multi-pulse sequence through a preset time delay is also time interval encoding in a broad sense, that is, by setting a pulse sequence with time interval encoding as (ΔT, a1', a2'), such that the echo pulse sequence of the transmitted pulse sequence is located in the preferred encoding time segment. That is, the valid echo pulse sequence is distributed outside a time period of the interference signal, effectively avoiding the interference signal in the LiDAR echoes.

According to a preferred embodiment of the present disclosure, in the control method 10 for the LiDAR, step S 104 further includes: adjusting the time interval encoding at the next transmission, so that the valid echo pulse sequence generated by the reflection of the multi-pulse sequence at the next transmission is located outside a time period of the interference signal.

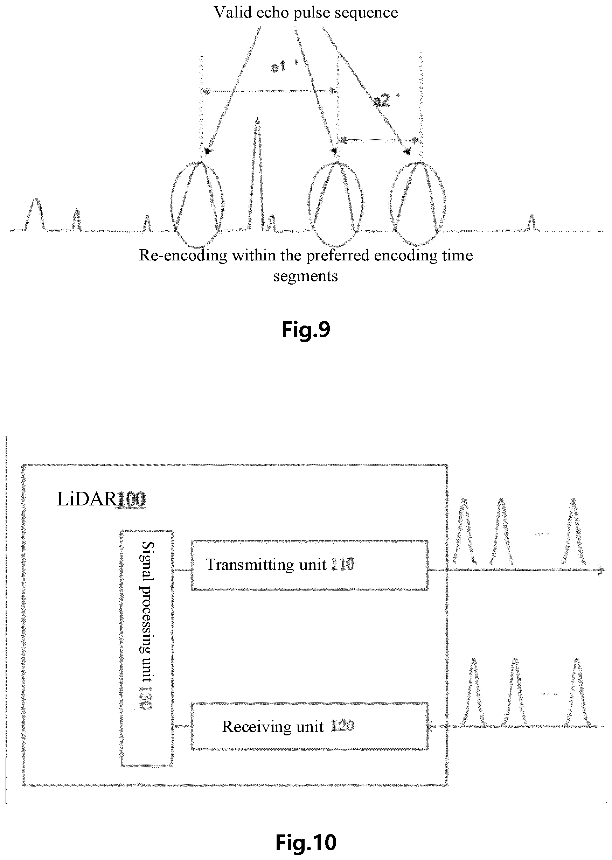

According to a preferred embodiment of the present disclosure, after re-encoding within the preferred encoding time segments as shown in FIG. 8, the LiDAR echoes of the actually transmitted pulses (for example, three pulses, the time intervasl between pulses are a1', a2') are as shown in the FIG. 9, and the valid echo pulse sequence effectively avoids interference signals. When actually calculating the distance, the preset time delay ΔT should be removed from the reception time. The new encoding characteristics (ΔT, a1', a2') are not a unique solution, as long as the requirement to avoid the time period of the interference signal can be met. In addition, it is explained that adjusting the setting of time interval encoding at the next transmission includes modifying one, two, or three of the encoding characteristics (ΔT, a1', a2'), but not necessarily adjusting three thereof simultaneously.

According to a preferred embodiment of the present disclosure, as shown in FIG. 10, the present disclosure further provides a LiDAR 100, including:
a transmitting unit 110 configured to transmit a multi-pulse sequence with a time interval encoding;
a receiving unit 120 configured to receive LiDAR echoes;
a signal processing unit 130 coupled to the transmitting unit 110 and the receiving unit 120 respectively and configured to:
   determine whether the LiDAR echoes include a valid echo pulse sequence corresponding to the multi-pulse sequence;
   when the LiDAR echoes include the valid echo pulse sequence corresponding to the multi-pulse sequence, determine whether the valid echo pulse sequence is interfered with according to pulse characteristic of the valid echo pulse sequence; and
   when the valid echo pulse sequence is interfered with, adjust the time interval encoding at a next transmission according to a distribution of a interference signal in the LiDAR echoes.

According to a preferred embodiment of the present disclosure, the LiDAR 100 further includes:
an analog-to-digital conversion unit configured to sample and perform analog-to-digital conversion on the LiDAR echoes;
wherein the signal processing unit 130 is further configured to:
extract a plurality of echo pulse signals with peak intensities greater than an intensity threshold in the LiDAR echoes after the analog-to-digital conversion; and
when a time interval of the plurality of echo pulse signals matches a time interval of the transmitted pulse sequence, take the plurality of echo pulse signals as the valid echo pulse sequence corresponding to the transmitted pulse sequence; and
the interference signal in the LiDAR echoes includes: an echo pulse signal of the plurality of echo pulse signals with the peak intensities greater than the intensity threshold in the LiDAR echoes excluding the valid echo pulse sequence, and an interfered pulse of the valid echo pulse sequence.

According to a preferred embodiment of the present disclosure, the signal processing unit 130 in the LiDAR 100 is further configured to:
calculate a difference between the time interval of the plurality of echo pulse signals and the time interval of the transmitted pulse sequence, and when the difference is less than a first tolerance threshold, taking the plurality of echo pulse signals as the valid echo pulse sequence corresponding to the transmitted pulse sequence.

According to a preferred embodiment of the present disclosure, the signal processing unit 130 in the LiDAR 100 is further configured to:
when the LiDAR echoes include an echo pulse signal with a peak intensity greater than the intensity threshold and do not include the valid echo pulse sequence corresponding to the transmitted pulse sequence, adjust the time interval encoding at the next transmission.

According to a preferred embodiment of the present disclosure, the signal processing unit 130 in the LiDAR 100 is further configured to:
determine whether the valid echo pulse sequence is interfered with according to a similarity between pulse width characteristic of a plurality of pulses in the valid echo pulse sequence and pulse width characteristic of a plurality of pulses in the transmitted pulse sequence; and/or
determine whether the valid echo pulse sequence is interfered with according to a similarity between peak intensity characteristic of the plurality of pulses in the valid echo pulse sequence and peak intensity characteristic of the plurality of pulses in the transmitted pulse sequence.

According to a preferred embodiment of the present disclosure, the signal processing unit 130 in the LiDAR 100 is further configured to:
determine that the valid echo pulse sequence is interfered with when relative differences between the pulse widths of the plurality of pulses in the valid echo pulse sequence and the pulse widths of the plurality of pulses in the transmitted pulse sequence are greater than a second tolerance threshold, and determine at least one interfered pulse according to the relative differences in pulse widths; and/or
determine that the valid echo pulse sequence is interfered with when relative differences between the peak intensities of the plurality of pulses in the valid echo pulse sequence and the peak intensities of the plurality of pulses in the transmitted pulse sequence are greater than a third tolerance threshold, and determine at least one interfered pulse according to the relative differences in peak intensities.

According to a preferred embodiment of the present disclosure, the signal processing unit 130 in the LiDAR 100 is further configured to:
calculate a sum of absolute differences between the pulse widths of the plurality of pulses in the valid echo pulse sequence;
when the sum of the absolute differences is greater than a second tolerance threshold, determine that the valid echo pulse sequence is interfered with, and determine at least one interfered pulse according to the absolute differences; and/or
calculate a sum of absolute differences between the peak intensities of the plurality of pulses in the valid echo pulse sequence; and
when the sum of the absolute differences is greater than the third tolerance threshold, determine that the valid echo pulse sequence is interfered with, and determine at least one interfered pulse according to the absolute differences.

According to a preferred embodiment of the present disclosure, the signal processing unit 130 in the LiDAR 100 is further configured to:
adjust the time interval encoding at the next transmission according to the distribution of the interference signal in the LiDAR echoes, such that the valid echo pulse sequence generated by the reflection of the multi-pulse sequence at the next transmission is located outside a time period of the interference signal.

According to a preferred embodiment of the present disclosure, the signal processing unit 130 in the LiDAR 100 is further configured to:
transmit the multi-pulse sequence with a preset time delay at the next transmission according to the distribution of the interference signal in the LiDAR echoes.

The working process of each component of the LiDAR 100 has been explained in detail in the introduction of the control method 10 above, and will not be described again herein.

The preferred embodiments of the present disclosure provide a control method for a LiDAR. According to the consistency of the pulse characteristic of the valid echo pulse sequence (or the degree to which the expectation is met), whether the LiDAR is interfered with is determined, and the setting of time interval encoding is adjusted at the next transmission according to the distribution of the interference signal in the LiDAR echoes. After determining that the LiDAR has been interfered with, an uninterfered time segment in the LiDAR echoes is used for the re-encoding. In the next detection cycle, relatively regular and fixed signal interference can be effectively avoided, thereby improving detection performance of the LiDAR. In addition, since the encoding is set to be dynamic, it is possible to avoid the complete loss of the LiDAR echo signal caused by the effective signal being always under the influence of strong interference.

It should be noted finally that the contents described above are only preferred embodiments of the present disclosure, and are not used to limit the present disclosure. Although the detailed description of the present disclosure has been provided with reference to the foregoing embodiments, those skilled in the art may still make modifications to the technical solution as recited in each of the foregoing embodiments, or make equivalent replacements for some of the technical features therein. Any modification, equivalent replacement, or improvement, etc., made within the spirit and principles of the present disclosure, should be included in the protection scope of the present disclosure.

## Claims

1. A control method for a LiDAR, comprising:
S101: transmitting a multi-pulse sequence with a time interval encoding;
S102: receiving LiDAR echoes to determine whether the LiDAR echoes comprise a valid echo pulse sequence corresponding to the multi-pulse sequence;
S103: when the LiDAR echoes comprises the valid echo pulse sequence corresponding to the multi-pulse sequence, determining whether the valid echo pulse sequence is interfered with according to a pulse characteristic of the valid echo pulse sequence; and
S104: when the valid echo pulse sequence is interfered with, adjusting the time interval encoding at a next transmission according to a distribution of an interference signal in the LiDAR echoes.

2. The control method of claim 1, wherein the step S102 further comprises:
extracting a plurality of echo pulse signals with peak intensities greater than an intensity threshold in the LiDAR echoes; and
when a time interval of the plurality of echo pulse signals matches a time interval of the multi-pulse sequence, taking the plurality of echo pulse signals as the valid echo pulse sequence corresponding to the multi-pulse sequence, and
the interference signal in the LiDAR echoes comprises: an echo pulse signal of the plurality of echo pulse signals with the peak intensities greater than the intensity threshold in the LiDAR echoes excluding the valid echo pulse sequence, and an interfered pulse of the valid echo pulse sequence.

3. The control method of claim 2, wherein the step S102 further comprises:
calculating a difference between the time interval of the plurality of echo pulse signals and the time interval of the multi-pulse sequence, and when the difference is less than a first tolerance threshold, taking the plurality of echo pulse signals as the valid echo pulse sequence corresponding to the multi-pulse sequence.

4. The control method of claim 2 or 3, further comprising:
when the LiDAR echoes comprise an echo pulse signal with a peak intensity greater than the intensity threshold and do not comprise the valid echo pulse sequence corresponding to the multi-pulse sequence, adjusting the time interval encoding at the next transmission.

5. The control method of any one of claims 1 to 3, wherein step S 103 further comprises:
determining whether the valid echo pulse sequence is interfered with according to a similarity between pulse width characteristic of a plurality of pulses in the valid echo pulse sequence and pulse width characteristic of a plurality of pulses in the multi-pulse sequence; and/or
determining whether the valid echo pulse sequence is interfered with based on a similarity between peak intensity characteristic of the plurality of pulses in the valid echo pulse sequence and peak intensity characteristic of the plurality of pulses in the multi-pulse sequence.

6. The control method of claim 5, wherein the step S103 further comprises:
determining that the valid echo pulse sequence is interfered with when relative differences between pulse widths of the plurality of pulses in the valid echo pulse sequence and pulse widths of the plurality of pulses in the multi-pulse sequence are greater than a second tolerance threshold, and determining at least one interfered pulse according to the relative differences in pulse widths.

7. The control method of claim 5, wherein the step S103 further comprises:
calculating a sum of absolute differences between any two of the pulse widths of the plurality of pulses in the valid echo pulse sequence; and
when the sum of the absolute differences is greater than a second tolerance threshold, determining that the valid echo pulse sequence is interfered with, and determining at least one interfered pulse according to the absolute differences.

8. The control method of claim 5, wherein the step S103 further comprises:
determining that the valid echo pulse sequence is interfered with when relative differences between peak intensities of the plurality of pulses in the valid echo pulse sequence and peak intensities of the plurality of pulses in the multi-pulse sequence are greater than a third tolerance threshold, and determining at least one interfered pulse according to the relative differences in peak intensities.

9. The control method of claim 5, wherein the step S103 further comprises:
calculating a sum of absolute differences between any two of the peak intensities of the plurality of pulses in the valid echo pulse sequence; and
when the sum of the absolute differences is greater than a third tolerance threshold, determining that the valid echo pulse sequence is interfered with, and determining at least one interfered pulse according to the absolute differences.

10. The control method of any one of claims 1 to 3, wherein step S104 further comprises:
adjusting the time interval encoding at the next transmission according to the distribution of the interference signal in the LiDAR echoes, such that the valid echo pulse sequence generated by the reflection of the multi-pulse sequence at the next transmission is located outside a time period of the interference signal.

11. The control method of claim 10, wherein the step S104 further comprises:
transmitting the multi-pulse sequence with a preset time delay at the next transmission according to the distribution of the interference signal in the LiDAR echoes.

12. A LiDAR, comprising:
a transmitting unit configured to transmit a multi-pulse sequence with a time interval encoding;
a receiving unit configured to receive LiDAR echoes;
a signal processing unit coupled to the transmitting unit and the receiving unit respectively and configured to:
determine whether the LiDAR echoes comprise a valid echo pulse sequence corresponding to the multi-pulse sequence;
when the LiDAR echoes comprise the valid echo pulse sequence corresponding to the multi-pulse sequence, determine whether the valid echo pulse sequence is interfered with according to a pulse characteristic of the valid echo pulse sequence; and
when the valid echo pulse sequence is interfered with, adjust the time interval encoding at a next transmission according to a distribution of an interference signal in the LiDAR echoes.

13. The LiDAR of claim 12, further comprising:
an analog-to-digital conversion unit configured to sample and perform analog-to-digital conversion on the LiDAR echoes,
wherein the signal processing unit is further configured to:
extract a plurality of echo pulse signals with peak intensities greater than an intensity threshold in the LiDAR echoes after the analog-to-digital conversion; and
when a time interval of the plurality of echo pulse signals matches a time interval of the multi-pulse sequence, take the plurality of echo pulse signals as the valid echo pulse sequence corresponding to the multi-pulse sequence, and
the interference signal in the LiDAR echoes comprises: an echo pulse signal of the plurality of echo pulse signals with the peak intensities greater than the intensity threshold in the LiDAR echoes excluding the valid echo pulse sequence, and an interfered pulse of the valid echo pulse sequence.

14. The LiDAR of claim 13, wherein the signal processing unit is further configured to:
calculate a difference between the time interval of the plurality of echo pulse signals and the time interval of the multi-pulse sequence, and when the difference is less than a first tolerance threshold, taking the plurality of echo pulse signals as the valid echo pulse sequence corresponding to the multi-pulse sequence.

15. The LiDAR of claim 13 or 14, wherein the signal processing unit is further configured to:
when the LiDAR echoes comprise an echo pulse signal with a peak intensity greater than the intensity threshold and do not comprise the valid echo pulse sequence corresponding to the multi-pulse sequence, adjust the time interval encoding at the next transmission.

16. The LiDAR of any one of claims 12 to 14, wherein the signal processing unit is further configured to:
determine whether the valid echo pulse sequence is interfered with according to a similarity between pulse width characteristic of a plurality of pulses in the valid echo pulse sequence and pulse width characteristic of a plurality of pulses in the multi-pulse sequence; and/or
determine whether the valid echo pulse sequence is interfered with according to a similarity between peak intensity characteristic of the plurality of pulses in the valid echo pulse sequence and peak intensity characteristic of the plurality of pulses in the multi-pulse sequence.

17. The LiDAR of claim 16, wherein the signal processing unit is further configured to:
determine that the valid echo pulse sequence is interfered with when relative differences between pulse widths of the plurality of pulses in the valid echo pulse sequence and pulse widths of the plurality of pulses in the multi-pulse sequence are greater than a second tolerance threshold, and determine at least one interfered pulse according to the relative differences in pulse widths; and/or
determine that the valid echo pulse sequence is interfered with when relative differences between peak intensities of the plurality of pulses in the valid echo pulse sequence and peak intensities of the plurality of pulses in the multi-pulse sequence are greater than a third tolerance threshold, and determine at least one interfered pulse according to the relative differences in peak intensities.

18. The LiDAR of claim 16, wherein the signal processing unit is further configured to:
calculate a sum of absolute differences between any two of the pulse widths of the plurality of pulses in the valid echo pulse sequence;
when the sum of the absolute differences is greater than a second tolerance threshold, determine that the valid echo pulse sequence is interfered with, and determine at least one interfered pulse according to the absolute differences; and/or
calculate a sum of absolute differences between any two of the peak intensities of the plurality of pulses in the valid echo pulse sequence; and
when the sum of the absolute differences is greater than a third tolerance threshold, determine that the valid echo pulse sequence is interfered with, and determine at least one interfered pulse according to the absolute differences.

19. The LiDAR of any one of claims 12 to 14, wherein the signal processing unit is further configured to:
adjust the time interval encoding at the next transmission according to the distribution of the interference signal in the LiDAR echoes, such that the valid echo pulse sequence generated by the reflection of the multi-pulse sequence at the next transmission is located outside a time period of the interference signal.

20. The LiDAR of claim 19, wherein the signal processing unit is further configured to:
transmit the multi-pulse sequence with a preset time delay at the next transmission according to the distribution of the interference signal in the LiDAR echoes.
